(19) Europäisches Patentamt / European Patent Office / Office européen des brevets

(11) **EP 3 775 594 B1**

(12) **EUROPEAN PATENT SPECIFICATION**

(45) Date of publication and mention
of the grant of the patent:
**28.06.2023   Bulletin 2023/26**

(21) Application number: **19720418.3**

(22) Date of filing: **11.04.2019**

(51) International Patent Classification (IPC):
*F16D 48/06* (2006.01)

(52) Cooperative Patent Classification (CPC):
**F16D 48/06;** F16D 2500/30415; F16D 2500/3065;
F16D 2500/3067; F16D 2500/3104;
F16D 2500/50236

(86) International application number:
**PCT/EP2019/059207**

(87) International publication number:
**WO 2019/197516 (17.10.2019 Gazette 2019/42)**

(54) **APPARATUS FOR ADJUSTING CLUTCH CHARACTERISTIC CURVE**

VORRICHTUNG ZUR EINSTELLUNG DER KUPPLUNGSKENNLINIE

APPAREIL POUR AJUSTER LA COURBE CARACTÉRISTIQUE D'UN EMBRAYAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2018   KR 20180042694**

(43) Date of publication of application:
**17.02.2021   Bulletin 2021/07**

(73) Proprietor: **Vitesco Technologies GmbH
93055 Regensburg (DE)**

(72) Inventor: **SEO, HyeonDeok
Seoul 05240 (KR)**

(74) Representative: **Vitesco Technologies
Landsberger Str. 187, Haus D
80687 München (DE)**

(56) References cited:
**US-A1- 2004 159 523     US-A1- 2012 316 742
US-A1- 2017 088 137**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to an apparatus for adjusting a clutch characteristic curve, and more particularly, to an apparatus for adjusting a clutch characteristic curve, wherein the clutch characteristic curve is adjusted according to a mileage of a vehicle, so that the clutch characteristic curve is more stably managed.

BACKGROUND ART

In general, clutch systems each equipped with a dual clutch transmission (DCT) receive information about an engine torque and an engine speed from an electronic control unit (hereinafter referred to as ECU) and control a clutch.

That is, a clutch target torque is calculated on the basis of the information about the engine torque and the engine speed, and by using this, a clutch characteristic curve is learnt.

This clutch characteristic curve has a tendency of varying according to the temperature of a clutch, progress in wear, and the like. Therefore, not until an appropriate clutch characteristic curve is always updated through appropriate learning, transmission quality can be ensured during speed change by accurately controlling transmission torque of the clutch.

In related arts, the current clutch characteristic curve is adjusted on the basis of a learnt value obtained through a most recent clutch characteristic learning.

That is, in related arts, learning regions are divided according to distributed positions of learnt values, and the amount to be adjusted is determined on the basis of a predetermined increment. Thus, the amount of adjusting the clutch characteristic curve is set relatively low in a section in which variation in clutch system characteristics is large, so that a long time is required until convergence, and is set relatively large in a section in which variation in clutch system characteristics is small, so that the amount of adjusting the clutch characteristic curve serves as a factor that degrades the stability of the clutch characteristic curve.

Furthermore, various systems including a clutch require a taming time until the characteristics thereof are stabilized for a certain time. After a vehicle is manufactured, or during a time interval in which taming is required, such as in replacing a system, variation in clutch characteristic is large, and when the characteristic is stabilized after an elapse of time, variation in clutch characteristic is small.

Korean Patent Publication No. 10-1526745 (June 01, 2015) discloses a background art of the present invention entitled "method for adjusting clutch characteristic of vehicle."

Methods for controlling a vehicle clutch from the prior art are also known from US 2004/159523 A1, US 2012/316742 A1 and US 2017/088137 A1, for example. DISCLOSURE OF THE INVENTION

TECHNICAL PROBLEM

The present invention is devised to solve the above-mentioned limitations, and the purpose of the present invention according to an aspect is to provide an apparatus for adjusting a clutch characteristic curve, wherein a clutch characteristic curve is adjusted according to a mileage of a vehicle, so that the clutch characteristic curve is stably managed.

MEANS FOR SOLVING THE PROBLEM

An apparatus for adjusting a clutch characteristic curve according to the invention is described in claim 1.

The clutch characteristic curve adjustment unit according to a preferred embodiment of the present invention is characterized by selectively adjusting at least one among points on the clutch characteristic curve on the basis of the learnt value.

The clutch characteristic curve adjustment unit according to a preferred embodiment of the present invention is characterized by adjusting: a first point when learning of a touch point is generated by the clutch characteristic curve learning unit; a second point when learning of the clutch characteristic curve is generated in a preset low-torque region by the clutch characteristic curve learning unit; the second point and a third point when learning of the clutch characteristic curve is generated in a preset middle-torque region by the clutch characteristic curve learning unit; and the third point and a fourth point when learning of the clutch characteristic curve is generated in a preset high-torque region by the clutch characteristic curve learning unit.

The clutch characteristic curve adjustment unit according to a preferred embodiment of the present invention is characterized by reducing a variation range of the clutch characteristic curve according to the mileage.

The clutch characteristic curve adjustment unit according to a preferred embodiment of the present invention is characterized by reducing the variation range of the clutch characteristic curve as the mileage increases.

A preferred embodiment of the present invention is characterized in that the amount reflecting the learning amount is increased or decreased in proportion to the learning amount.

The clutch characteristic curve adjustment unit according to a preferred embodiment of the present invention is characterized by maintaining the points of the clutch characteristic curve when the learning amount falls within the preset set range.

ADVANTAGEOUS EFFECTS

An apparatus for adjusting a clutch characteristic curve according to an aspect of the present invention adjusts the clutch characteristic curve according to claim 1 and therefore more stably manages the clutch characteristic curve.

BRIEF DESCRIPTION OF THE DRAWINGS

FIG. 1 is a block diagram of an apparatus for adjusting a clutch characteristic curve according to an embodiment of the present invention.

FIG. 2 is a view illustrating a clutch characteristic curve according to an embodiment of the present invention.

FIG. 3 is a view exemplarily illustrating a variation in a first point according to an embodiment of the present invention.

FIG. 4 is a view illustrating an amount reflecting a learnt value and a rate reflecting a mileage according to a variation in a first point in an embodiment of the present invention.

FIG. 5 is a view exemplarily illustrating a variation in a learnt value within a low-torque region according to an embodiment of the present invention.

FIG. 6 is a view illustrating an amount reflecting a learning amount and a rate reflecting a mileage according to a variation in a learnt value within a low-torque region in an embodiment of the present invention.

FIG. 7 is a view exemplarily illustrating a variation in a learnt value within a middle-torque region according to an embodiment of the present invention.

FIGS. 8 and 9 are views illustrating an amount reflecting a learnt value and a rate reflecting a mileage according to a variation in a learnt value within a middle-torque region in an embodiment of the present invention.

FIG. 10 is a view exemplarily illustrating a variation in a learnt value within a high-torque region according to an embodiment of the present invention.

FIGS. 11 and 12 are views illustrating an amount reflecting a learnt value and a rate reflecting a mileage according to a variation in a learnt value within a high-torque region in an embodiment of the present invention.

MODE FOR CARRYING OUT THE INVENTION

Hereinafter, an apparatus for adjusting a clutch characteristic curve according to an embodiment of the present invention will be described in detail with reference to the accompanying drawings. In this description, the thickness of lines, the sizes of components, and the like may be exaggerated in the drawings for clarity and convenience of description. In addition, the terms to be described below are terms defined considering functions in the present invention and may vary according to intentions or customs of a user and an operator. Therefore, the definition of these terms should be determined on the basis of the overall contents of this specification.

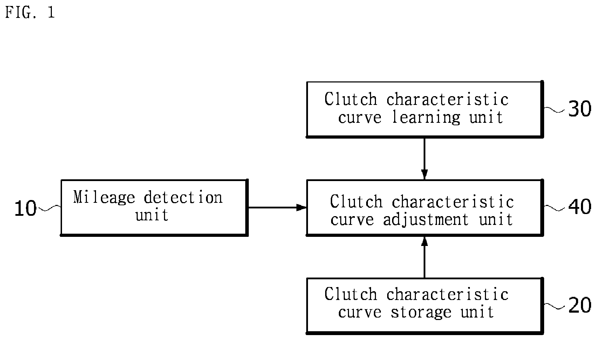

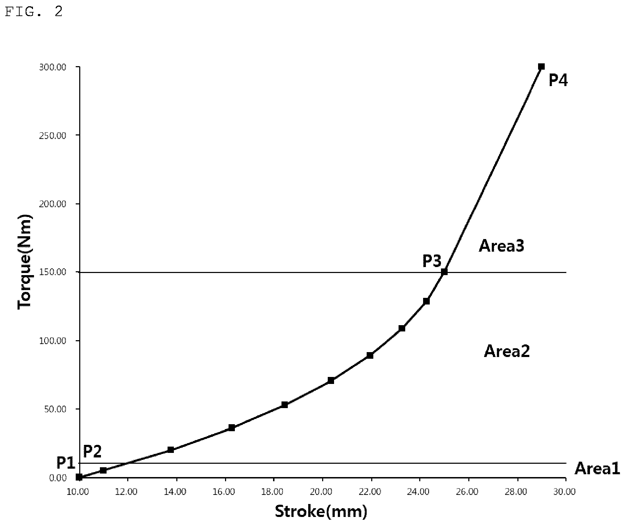

FIG. 1 is a block diagram of an apparatus for adjusting a clutch characteristic curve according to an embodiment of the present invention, and FIG. 2 is a view illustrating a clutch characteristic curve according to an embodiment of the present invention.

Referring to FIG. 1, an apparatus for adjusting a clutch characteristic curve according to an embodiment of the present invention includes: a mileage detection unit 10; a clutch characteristic curve storage unit 20; a clutch characteristic curve learning unit 30; and a clutch characteristic curve adjustment unit 40.

The mileage detection unit 10 detects a traveling distance of a vehicle, that is, a mileage. The mileage detection unit 10 may include various types of sensors which directly detect the mileage of the vehicle.

For reference, in this embodiment, it is exemplarily illustrated that the mileage detection unit 10 detects the mileage of the vehicle. However, the technical scope of the present invention is not limited thereto, and also includes detection of the mileage of a vehicle by inputting the mileage of the vehicle stored in a cluster controller of the vehicle to the characteristic curve adjustment unit 40.

The clutch characteristic curve storage unit 20 stores a clutch characteristic curve.

The clutch characteristic curve is defined as a relationship between the maximum transmissible torque and an applied clutch stroke in a clutch system including a dual clutch transmission (DCT). When a target torque is determined, a target stroke is determined according to the clutch characteristic curve, and a clutch actuator is operated according to the determined clutch torque.

Referring to FIG. 2, the clutch characteristic curve has a curved shape. The x-axis indicates a clutch stroke, and the y-axis indicates a clutch torque. On the basis of this clutch characteristic curve, a target clutch stroke corresponding to a target application clutch torque may be determined, and a maximum transmissible clutch torque may be calculated according to the current clutch stroke.

The clutch characteristic curve may be managed by a first point P1 which is a touch point, a second point P2, a third point P3, and a fourth point P4, and seven points between the second point P2 and the third point P3 are detected by using spline interpolation.

The clutch characteristic learning unit 30 adjusts (updates) each of the points, for example, at least one among the first point P1, the second point P2, the third point P3, and the fourth point P4 through clutch characteristic learning in various cases. Here, the first point P1 is a touch point, and the second to fourth points P2 to P4 are power transmissible points.

That is, the clutch characteristic learning unit 30 uses data obtained through vehicle operations, for example, an engine rotation speed, an engine torque, a clutch input rotation speed, and the like, to learn the clutch characteristic curve. In this case, the learnt value of the first point P1 may be obtained through learning of a touch point, and the remaining second to fourth points P2 to P4 may be obtained through learning of the clutch characteristic curve.

Meanwhile, in this embodiment, a region between the first point P1 and the second point P2 is defined as a low-torque region Areal, a region between the second point P2 and the third point P3 is defined as a middle-torque region Area2, and the region between the third point P3 and the fourth point P4 is defined as a high-torque region Area3.

The clutch characteristic adjustment unit 40 reflects the mileage detected by the mileage detection unit 10 to the learnt value obtained through the clutch characteristic curve learning unit 30, thereby adjusting the clutch characteristic curve. In this case, the clutch characteristic curve adjustment unit 40 adjusts the variation range of the clutch characteristic curve according to the mileage such that the larger the mileage, the smaller the variation range of the clutch characteristic curve.

Normally, the clutch system requires a taming time until being stabilized. This is because the clutch surface of the clutch system is uneven. Thus, the clutch characteristic curve adjustment unit 40 reflects the mileage to the learnt value obtained by the clutch characteristic learning unit 30 to adjust the clutch characteristic curve, thereby allowing the clutch system to be stabilized. In particular, the clutch characteristic curve adjustment unit 40 sets a relatively large variation range of the clutch characteristic curve when the mileage is relatively large at an initial stage, and thereafter sets the clutch variation range such that the larger the mileage, the smaller the clutch variation range. That is, when the mileage increases due to vehicle operations, the clutch system also becomes gradually stabilized. Therefore, the clutch characteristic curve adjustment unit 40 functions such that the larger the mileage, the smaller the clutch variation range.

To this end, the clutch characteristic curve adjustment unit 40 selectively adjusts any one among the first to fourth points (P1 to P4) of the clutch characteristic curve on the basis of the learnt value obtained by the clutch characteristic curve learning unit 30. That is, the clutch characteristic curve adjustment unit 40 adjusts the first point P1 when learning of a touch point is generated by the clutch characteristic curve learning unit 30; adjusts the second point P2 when learning of the clutch characteristic curve is generated in a preset low-torque region by the clutch characteristic curve learning unit 30; adjusts the second point P2 and the third point P3 when learning of the clutch characteristic curve is generated in a preset middle-torque region by the clutch characteristic curve learning unit 30; and adjusts the third point P3 and the fourth point P4 when learning of the clutch characteristic curve is generated in a preset high-torque region by the clutch characteristic curve learning unit 30.

In this case, the clutch characteristic curve adjustment unit 40 multiplies an amount reflecting a learning amount, between the current point of the clutch characteristic curve and the learnt value, and the rate reflecting the mileage, and the resultant product is added to the current point of the clutch characteristic curve, thereby adjusting each of the points on the clutch characteristic curve.

Here, the learning amount between the current point and the learnt value is the amount of stroke variation at the same torque between the learnt value obtained through clutch learning and the clutch characteristic curve, and the amount reflecting the learning amount is the amount of actual stroke adjustment applied to the corresponding learning amount. The reason why the amount reflecting the learning amount is applied is because even when the learning amount is determined, the clutch characteristic curve is not directly, but is adjusted so as to approach the learning amount.

Here, the amount reflecting the learning amount increases or decreased proportional to the learning amount, so that a set range may be set for allowing the points of the clutch characteristic curve to be maintained. The set range is a dead zone and the rate reflecting the learning amount is set to 0. Consequently, since the amount reflecting learning amount is 0, the learning amount is included within the dead zone, and when the learning amount is very small, the learning amount is not reflected. When the learning amount is out of the set range, since the set range is not 0, the amount reflecting the learning amount increases or decreases according to the learning amount.

The rate reflecting the mileage is set in advance for every mileage, and the larger the mileage, the smaller the rate reflecting the mileage. Consequently, the further the clutch system is stabilized by an increase of the mileage of a vehicle, the smaller the rate reflecting the mileage, and thus, the variation of the clutch characteristic curve is allowed to be stabilized.

Hereinafter an example will be described in which each of the touch point and the second to fourth points of regions (the low-torque region, the middle-torque region, and the high-torque region) is adjusted.

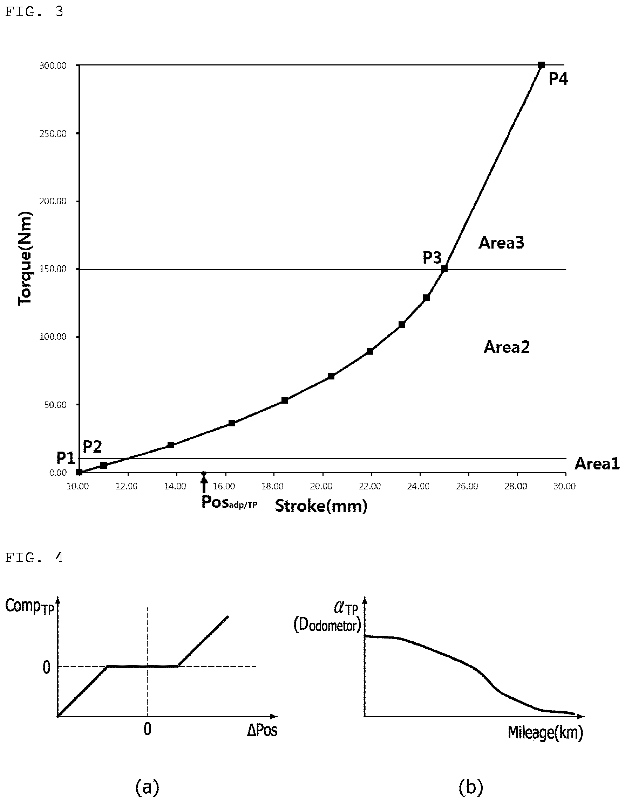

FIG. 3 is a view exemplarily illustrating a variation in a first point according to an embodiment of the present invention, and FIG. 4 is a view illustrating an amount reflecting a learnt value and a rate reflecting a mileage according to a variation in a first point in an embodiment of the present invention.

First, as illustrated in FIG. 3, when touch point learning is generated by the clutch characteristic curve learning unit 30, the clutch characteristic curve adjustment unit 40 adjusts the first point according to a mileage by Equation 1 below.

[Equation 1]

$$Pos_{P1/new} = Pos_{P1/old} + \alpha_{TP}(D_{odometer}) \times Comp_{TP}(Pos_{adp/TP} - Pos_{P1/old})$$

$Pos_{P1/new}$ is the adjusted first point, $Pos_{P1/old}$ is the current first point before being adjusted, $\alpha_{TP}(D_{odometer})$ is the rate reflecting the mileage, and

$Comp_{TP}(Pos_{adp/TP} - Pos_{P1/old})$ is the amount reflecting the learning amount. Here, $Comp_{TP}$ is the rate reflecting the learning amount, $Pos_{adp/TP}$ is the learnt value, and $Pos_{adp/TP} - Pos_{P1/old}$ is the learning amount.

That is, the adjusted first point is calculated by adding, to the current first point, the value of the product of the amount reflecting the learning amount and the rate reflecting the mileage.

Referring to (a) of FIG. 4, the amount reflecting the learning amount is 0 according to a set range for maintaining the points of the clutch characteristic curve when the learning amount is relatively small and increase or decreases proportional to the learning amount around the set range.

In addition, referring to (b) of FIG. 4, the larger the mileage, the smaller the rate reflecting the mileage.

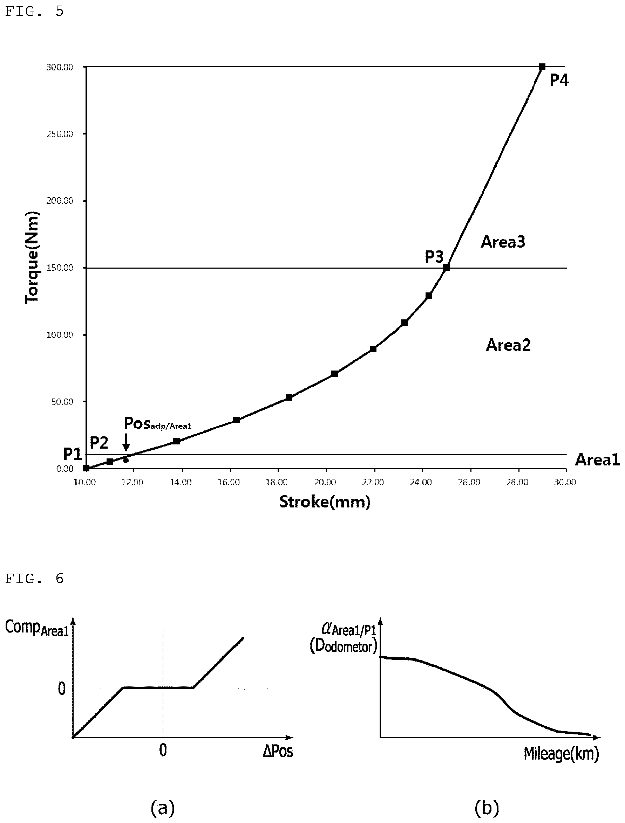

FIG. 5 is a view exemplarily illustrating a variation in a learnt value within a low-torque region according to an embodiment of the present invention, and FIG. 6 is a view illustrating an amount reflecting a learning amount and a rate reflecting a mileage according to a variation in a learnt value within the low-torque region in an embodiment of the present invention.

As illustrated in FIG. 5, when clutch learning in the low-torque region is generated by the clutch characteristic curve learning unit 30, the clutch characteristic curve adjustment unit 40 adjusts the second point according to a mileage by Equation 2 below.

[Equation 2]

$$Pos_{P2/new} = Pos_{P2/old} + \alpha_{Area1/p2}(D_{odometer}) \times Comp_{Area1/P2}(\Delta Pos)$$

$Pos_{P2/new}$ is the adjusted second point, $Pos_{P2/old}$ is the current second point before being adjusted, $\alpha_{Area1}(D_{odometer})$ is the rate reflecting the mileage, and

$Comp_{Area1}(\Delta Pos)$ is the amount reflecting the learning amount in the low-torque region. In addition, $Comp_{Area1/p2}$ is the rate reflecting learning amount in the low-torque region, and $\Delta Pos$ is the learning amount in the low-torque region. $Pos_{adp/Area1}$ in FIG. 5 is the learnt value in the low-torque region.

That is, the adjusted second point is calculated by adding, to the current second point, the value of the product of the amount reflecting the learning amount and the rate reflecting the mileage.

Referring to (a) of FIG. 6, the amount reflecting the learning amount is 0 according to a set range for maintaining the points of the clutch characteristic curve when the learning amount is relatively small and increase or decreases proportional to the learning amount around the set range.

In addition, referring to (b) of FIG. 6, the larger the mileage, the smaller the rate reflecting the mileage.

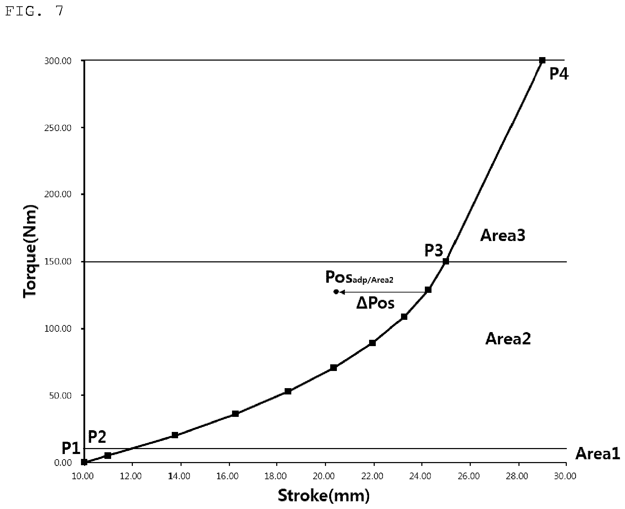

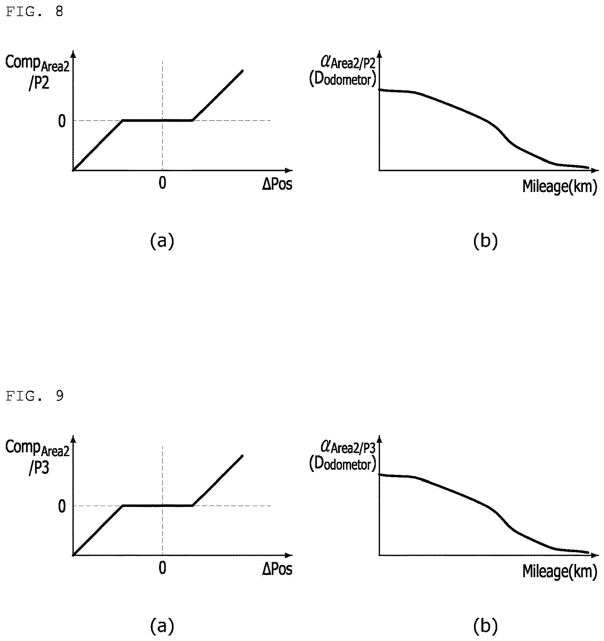

FIG. 7 is a view exemplarily illustrating a variation in a learnt value within a middle-torque region according to an embodiment of the present invention, and FIG. 8 and 9 are views illustrating an amount reflecting a learning amount and a rate reflecting a mileage according to a variation in a learnt value within the middle-torque region in an embodiment of the present invention.

As illustrated in FIG. 7, when clutch learning in the middle-torque region is generated by the clutch characteristic curve learning unit 30, the clutch characteristic curve adjustment unit 40 adjusts the second point and the third point according to a mileage by Equation 3 below.

[Equation 3]

$$Pos_{P2/new} = Pos_{P2/old} + \alpha_{Area2/p2}(D_{odometer}) \times Comp_{Area2/P2}(\Delta Pos)$$
$$Pos_{P3/new} = Pos_{P3/old} + \alpha_{Area2/p3}(D_{odometer}) \times Comp_{Area2/P3}(\Delta Pos)$$

$Pos_{P2/new}$ is the adjusted second point, $Pos_{P2/old}$ is the current second point before being adjusted, $\alpha_{Area2/P2}(D_{odometer})$ is the rate reflecting the mileage, and $Comp_{Area2/P2}(\Delta Pos)$ is the amount reflecting the learning amount in the middle-torque region. In addition, $Comp_{Area2/P2}$ is the rate reflecting learning amount in the middle-torque region, and $\Delta Pos$ is the learning amount in the middle-torque region. $Pos_{adp/Area2}$ in FIG. 7 is the learnt value in the middle-torque region.

$Pos_{P3/new}$ is the adjusted third point, $Pos_{P3/old}$ is the current third point before being adjusted, $\alpha_{Area2/P3}(D_{odometer})$ is the rate reflecting the mileage, and $Comp_{Area2/P3}(\Delta Pos)$ is the amount reflecting the learning amount in the middle-torque region. In addition, $Comp_{Area2/P3}$ is the rate reflecting learning amount in the middle-torque region, and $\Delta Pos$ is the learning amount in the middle-torque region.

That is, the adjusted second point is calculated by adding, to the current second point, the value of the product of the amount reflecting the learning amount and the rate reflecting the mileage, and the adjusted third point is calculated by adding, to the current third point, the value of the product of the amount reflecting the learning amount and the rate reflecting the mileage.

Referring to (a) of FIGS. 8 and 9, the amount reflecting the learning amount is 0 according to a set range for maintaining the points of the clutch characteristic curve when the learning amount is relatively small and increase or decreases proportional to the learning amount around the set range.

In addition, referring to (b) of FIGS. 8 and 9, the larger the mileage, the smaller the rate reflecting the mileage.

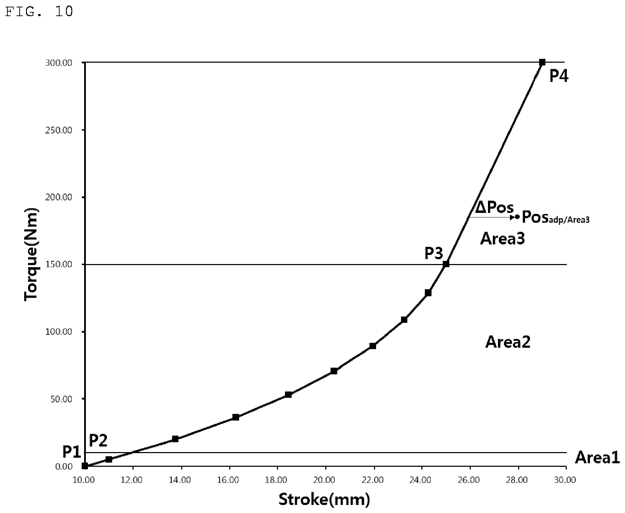

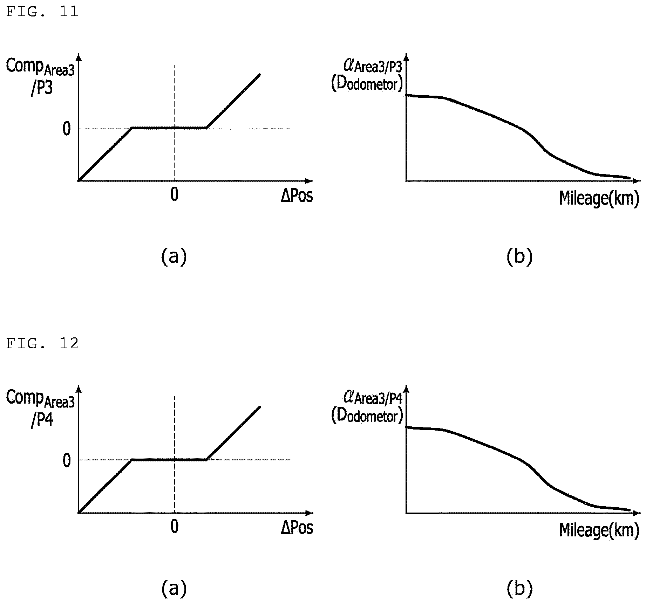

FIG. 10 is a view exemplarily illustrating a variation in a learnt value within a high-torque region according to an embodiment of the present invention, and FIG. 11 and 12 are views illustrating an amount reflecting a learning amount and a rate reflecting a mileage according to a variation in a learnt value within the high-torque region in an embodiment of the present invention.

As illustrated in FIG. 10, when clutch learning in the high-torque region is generated by the clutch characteristic curve learning unit 30, the clutch characteristic curve adjustment unit 40 adjusts the third point and the fourth point according to a mileage by Equation 4 below.

[Equation 4]

$$Pos_{P3/new} = Pos_{P3/old} + \alpha_{Area3/p3}(D_{odometer}) \times Comp_{Area3/P3}(\Delta Pos)$$
$$Pos_{P4/new} = Pos_{P4/old} + \alpha_{Area3/p4}(D_{odometer}) \times Comp_{Area3/P4}(\Delta Pos)$$

$Pos_{P3/new}$ is the adjusted third point, $Pos_{P3/old}$ is the current third point before being adjusted, $\alpha_{Area3/P3}(D_{odometer})$ is the rate reflecting the mileage, and $Comp_{Area3/P3}(\Delta Pos)$ is the amount reflecting the learning amount in the high-torque region. In addition, $Comp_{Area3/P3}$ is the rate reflecting learning amount in the high-torque region, and $\Delta Pos$ is the learning amount in the high-torque region. $Pos_{adp/Area3}$ in FIG. 10 is the learnt value in the high-torque region.

$Pos_{P4/new}$ is the adjusted fourth point, $Pos_{P4/old}$ is the current fourth point before being adjusted, $\alpha_{Area4}(D_{odometer})$ is the rate reflecting the mileage, and $Comp_{Area4/P4}(\Delta Pos)$ is the amount reflecting the learning amount in the high-torque region. $Pos_{adp/Area4}$ in FIG. 10 is the learnt value in the high-torque region.

That is, the adjusted third point is calculated by adding, to the current third point, the value of the product of the amount reflecting the learning amount and the rate reflecting the mileage, and the adjusted fourth point is calculated by adding, to the current fourth point, the value of the product of the amount reflecting the learning amount and the rate reflecting the mileage.

Referring to (a) of FIGS. 11 and 12, the amount reflecting the learning amount is 0 according to a set range for maintaining the points of the clutch characteristic curve when the learning amount is relatively small and increase or decreases proportional to the learning amount around the set range.

In addition, referring to (b) of FIGS. 11 and 12, the larger the mileage, the smaller the rate reflecting the mileage.

As described above, the clutch characteristic curve adjustment unit 40 reflects a rapid variation in characteristic by setting a high rate reflecting the mileage when the mileage is low in the initial stage of vehicle manufacture, and stably manages the clutch characteristic curve by setting a low rate reflecting the mileage when the mileage is much accumulated and the clutch characteristic is thereby relatively stabilized. As such, when the mileage is much accumulated, and the clutch characteristic is relatively stabilized, the rate reflecting the mileage is low even when a false learning is generated by disturbance, and thus, the influence of the disturbance can be reduced.

As such, an apparatus for adjusting a clutch characteristic curve according to an aspect of the present invention adjusts the clutch characteristic curve according to the mileage of a vehicle and more stably manages the clutch characteristic curve.

The present invention has been described with reference to the preferred embodiments illustrated in the drawings. However, this is merely an exemplarily embodiment, and those of ordinary skill in the art will recognize that various modifications and equivalents are possible in light of the above embodiments. Thus, the true technical scope of the invention should be defined by the claims appended below.

10: Mileage detection unit
20: Clutch characteristic curve storage unit
30: Clutch characteristic curve learning unit
40: Clutch characteristic curve adjustment unit

**Claims**

1. An apparatus for adjusting a clutch characteristic curve, the apparatus **characterized by** comprising:

   a mileage detection unit which detects a mileage of a vehicle;
   a clutch characteristic curve learning unit which learns the clutch characteristic curve on the basis of data obtained from a vehicle operation; and
   a clutch characteristic curve adjustment unit which adjusts the clutch characteristic curve by reflecting the mileage detected by the mileage detection unit to a learnt value obtained by the clutch characteristic curve learning unit, **characterized in that**, the clutch characteristic curve adjustment unit adjusts the points of the clutch characteristic curve by adding, to a current point of the clutch characteristic curve, a product of a rate reflecting the mileage and an amount reflecting a learning amount according to an amount learnt between the current point of the clutch characteristic curve and the learnt value.

2. The apparatus for adjusting a clutch characteristic curve as claimed in 1, **characterized in that** the clutch characteristic curve adjustment unit selectively adjusts at least one among points on the clutch characteristic curve on the basis of the learnt value.

3. The apparatus for adjusting a clutch characteristic curve as claimed in 2, **characterized in that** the clutch characteristic curve adjustment unit:

   adjusts a first point when learning of a touch point is generated by the clutch characteristic curve learning unit;
   adjusts a second point when learning of the clutch characteristic curve is generated in a preset low-torque region by the clutch characteristic curve learning unit;
   adjusts the second point and a third point when learning of the clutch characteristic curve is generated in a preset middle-torque region by the clutch characteristic curve learning unit; and
   adjusts the third point and a fourth point when learning of the clutch characteristic curve is generated in a preset high-torque region by the clutch characteristic curve learning unit.

4. The apparatus for adjusting a clutch characteristic curve as claimed in 1, **characterized in that** the clutch characteristic curve adjustment unit reduces a variation range of the clutch characteristic curve according to the mileage.

5. The apparatus for adjusting a clutch characteristic curve as claimed in 4, **characterized in that** the clutch characteristic curve adjustment unit reduces the variation range of the clutch characteristic curve as the mileage increases.

6. The apparatus for adjusting a clutch characteristic curve as claimed in 1, **characterized in that** the amount reflecting the learning amount is increased or decreased in proportion to the learning amount.

7. The apparatus for adjusting a clutch characteristic curve as claimed in 1, **characterized in that** the clutch characteristic curve adjustment unit maintains the points of the clutch characteristic curve when the learning amount falls within the preset set range.


**Patentansprüche**

1. Vorrichtung zur Anpassung einer Kupplungskennlinie, wobei die Vorrichtung **dadurch gekennzeichnet ist, dass** sie Folgendes umfasst:

   eine Kilometerstanderfassungseinheit, die einen Kilometerstand eines Fahrzeugs erfasst;
   eine Kupplungskennlinien-Lerneinheit, die auf der Grundlage von Daten, die im Zuge eines Fahrzeugbetriebs erhalten werden, die Kupplungskennlinie lernt; und
   eine Kupplungskennlinien-Anpassungseinheit, die durch Reflektieren des Kilometerstands, der durch die Kilometerstanderfassungseinheit erfasst wird, auf einen Lernwert, der durch die Kupplungskennlinien-Lerneinheit erhalten wird, die Kupplungskennlinie anpasst,
   **dadurch gekennzeichnet, dass**
   die Kupplungskennlinien-Anpassungseinheit die Punkte der Kupplungskennlinie anpasst, indem sie zu einem aktuellen Punkt der Kupplungskennlinie ein Produkt einer Rate, die den Kilometerstand reflektiert, und einer Menge, die eine Lernmenge gemäß einer zwischen dem aktuellen Punkt der Kupplungskennlinie und dem Lernwert gelernten Menge reflektiert, addiert.

2. Vorrichtung zur Anpassung einer Kupplungskennlinie nach Anspruch 1,
   **dadurch gekennzeichnet, dass** die Kupplungskennlinien-Anpassungseinheit selektiv wenigstens einen von Punkten auf der Kupplungskennlinie auf der Grundlage des Lernwerts anpasst.

3. Vorrichtung zur Anpassung einer Kupplungskennlinie nach Anspruch 2,
   **dadurch gekennzeichnet, dass** die Kupplungskennlinien-Anpassungseinheit:

   einen ersten Punkt anpasst, wenn durch die Kupplungskennlinien-Lerneinheit ein Lernen eines Berührungspunkts erzeugt wird;
   einen zweiten Punkt anpasst, wenn durch die Kupplungskennlinien-Lerneinheit ein Lernen der Kupplungskennlinie in einem voreingestellten Bereich mit niedrigem Drehmoment erzeugt wird;
   den zweiten Punkt und einen dritten Punkt anpasst, wenn durch die Kupplungskennlinien-Lerneinheit ein Lernen der Kupplungskennlinie in einem voreingestellten Bereich mit mittlerem Drehmoment erzeugt wird; und
   den dritten Punkt und einen vierten Punkt anpasst, wenn durch die Kupplungskennlinien-Lerneinheit ein Lernen der Kupplungskennlinie in einem voreingestellten Bereich mit hohem Drehmoment erzeugt wird.

4. Vorrichtung zur Anpassung einer Kupplungskennlinie nach Anspruch 1,
   **dadurch gekennzeichnet, dass** die Kupplungskennlinien-Anpassungseinheit einen Variationsbereich der Kupplungskennlinie gemäß dem Kilometerstand verkleinert.

5. Vorrichtung zur Anpassung einer Kupplungskennlinie nach Anspruch 4,
   **dadurch gekennzeichnet, dass** die Kupplungskennlinien-Anpassungseinheit den Variationsbereich der Kupplungskennlinie mit zunehmendem Kilometerstand verkleinert.

6. Vorrichtung zur Anpassung einer Kupplungskennlinie nach Anspruch 1,
   **dadurch gekennzeichnet, dass** die Menge, welche die Lernmenge reflektiert, im Verhältnis zur Lernmenge vergrößert oder verkleinert wird.

7. Vorrichtung zur Anpassung einer Kupplungskennlinie nach Anspruch 1,
   **dadurch gekennzeichnet, dass** die Kupplungskennlinien-Anpassungseinheit die Punkte der Kupplungskennlinie

**EP 3 775 594 B1**

beibehält, wenn die Lernmenge in den voreingestellten Einstellbereich fällt.

**Revendications**

1. Appareil pour ajuster la courbe caractéristique d'un embrayage, l'appareil comprenant :

   une unité de détection de kilométrage qui détecte un kilométrage d'un véhicule ;
   une unité d'apprentissage de courbe caractéristique d'embrayage qui apprend la courbe caractéristique d'embrayage sur la base de données obtenues à partir d'un fonctionnement de véhicule ; et
   une unité d'ajustement de courbe caractéristique d'embrayage qui ajuste la courbe caractéristique d'embrayage en reflétant le kilométrage détecté par l'unité de détection de kilométrage pour une valeur apprise obtenue par l'unité d'apprentissage de courbe caractéristique d'embrayage,
   **caractérisé en ce que**
   l'unité d'ajustement de courbe caractéristique d'embrayage ajuste les points de la courbe caractéristique d'embrayage en ajoutant, à un point actuel de la courbe caractéristique d'embrayage, un produit d'un taux reflétant le kilométrage et une quantité reflétant une quantité d'apprentissage conformément à une quantité apprise entre le point actuel de la courbe caractéristique d'embrayage et la valeur apprise.

2. Appareil pour ajuster la courbe caractéristique d'un embrayage selon la revendication 1, **caractérisé en ce que** l'unité d'ajustement de courbe caractéristique d'embrayage ajuste de façon sélective au moins un point parmi les points de la courbe caractéristique d'embrayage sur la base de la valeur apprise.

3. Appareil pour ajuster la courbe caractéristique d'un embrayage selon la revendication 2, **caractérisé en ce que** l'unité d'ajustement de courbe caractéristique d'embrayage :

   ajuste un premier point lorsque l'apprentissage d'un point de contact est généré par l'unité d'apprentissage de courbe caractéristique d'embrayage ;
   ajuste un deuxième point lorsque l'apprentissage de la courbe caractéristique d'embrayage est généré par l'unité d'apprentissage de courbe caractéristique d'embrayage dans une région à couple faible préréglée ;
   ajuste le deuxième point et un troisième point lorsque l'apprentissage de la courbe caractéristique d'embrayage est généré par l'unité d'apprentissage de courbe caractéristique d'embrayage dans une région à couple moyen préréglée ; et
   ajuste le troisième point et un quatrième point lorsque l'apprentissage de la courbe caractéristique d'embrayage est généré par l'unité d'apprentissage de courbe caractéristique d'embrayage dans une région à couple élevé préréglée .

4. Appareil pour ajuster la courbe caractéristique d'un embrayage selon la revendication 1, **caractérisé en ce que** l'unité d'ajustement de courbe caractéristique d'embrayage réduit une plage de variation de la courbe caractéristique d'embrayage en fonction du kilométrage.

5. Appareil pour ajuster la courbe caractéristique d'un embrayage selon la revendication 4, **caractérisé en ce que** l'unité d'ajustement de courbe caractéristique d'embrayage réduit la plage de variation de la courbe caractéristique d'embrayage lorsque le kilométrage augmente.

6. Appareil pour ajuster la courbe caractéristique d'un embrayage selon la revendication 1, **caractérisé en ce que** la quantité reflétant la quantité d'apprentissage est augmentée ou diminuée proportionnellement à la quantité d'apprentissage.

7. Appareil pour ajuster la courbe caractéristique d'un embrayage selon la revendication 1, **caractérisé en ce que** l'unité d'ajustement de courbe caractéristique d'embrayage maintient les points de la courbe caractéristique d'embrayage lorsque la quantité d'apprentissage est comprise dans la plage préréglée .

FIG. 1

Clutch characteristic
curve learning unit $\sim$ 30

10 $\sim$ Mileage detection
unit $\longrightarrow$ Clutch characteristic
curve adjustment unit $\sim$ 40

Clutch characteristic
curve storage unit $\sim$ 20

FIG. 2

FIG. 3

FIG. 4

(a)                                                              (b)

FIG. 5

FIG. 6

(a)                                                    (b)

FIG. 7

FIG. 8

(a)

(b)

FIG. 9

(a)

(b)

FIG. 10

EP 3 775 594 B1

FIG. 11

(a)

(b)

FIG. 12

(a)

(b)

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101526745
- US 2004159523 A1
- US 2012316742 A1
- US 2017088137 A1